# EUROPÄISCHE PATENTSCHRIFT

(11) **EP 2 607 756 B1**
(45) Veröffentlichungstag und Bekanntmachung des Hinweises auf die Patenterteilung: **02.03.2016**
(21) Anmeldenummer: 12197118.8
(22) Anmeldetag: 14.12.2012
(51) Int. Cl.: F16J 9/20, F16J 9/14

(54) **Dichtung mit Druckentlastungsfunktion**
Seal with pressure relief function
Joint avec fonction de détente

(30) Priorität: 20.12.2011 DE 102011056692
(43) Veröffentlichungstag der Anmeldung: 26.06.2013
(73) Patentinhaber: Parker Hannifin Manufacturing Germany GmbH & Co. KG, 74321 Bietigheim-Bissingen (DE)
(72) Erfinder: Hudlet, Klaus, 78588 Denkingen (DE); Papatheodorou, Thomas, 70376 Stuttgart (DE); Klein, Patrick, 70771 Leinfelden-Echterdingen (DE)
(74) Vertreter: Witte, Weller & Partner Patentanwälte mbB

(56) Entgegenhaltungen:
- WO-A2-02/08614
- DE-A1- 3 828 692
- DE-A1-102006 009 491
- DE-B3-102006 023 157
- DE-C1- 10 117 662
- JP-U- 62 100 309

## Beschreibung

Die vorliegende Erfindung betrifft eine Dichtung zur Aufnahme in einem Einbauraum zwischen einem ersten, insbesondere ruhenden, Maschinenteil und einem zweiten, insbesondere beweglichen, Maschinenteil zur Abdichtung einer Hochdruckseite gegenüber einer Niederdruckseite, wobei der Einbauraum durch eine Nut in dem ersten Maschinenteil gebildet ist.

Bei Dichtungsanordnungen zwischen relativ zueinander bewegbaren Maschinenteilen kann im Betriebszustand, das heißt bei einer translatorischen Bewegung der beiden Maschinenteile relativ zueinander, ein Mediendruckaufbau in den Zwischenräumen zwischen den einzelnen Dichtungselementen, wie einer Primär- und einer Sekundärdichtung, auftreten. Verursacht wird dies durch ungünstige Geschwindigkeitsverhältnisse der Maschinenteile, beispielsweise einer Kolbenstange relativ zum Einbauraum. Dann kann sich infolge unterschiedlicher Ausbildung von Schmierfilmdicken in dem Zwischenraum zwischen Primär- und Sekundärdichtung ein hydraulischer Druck aufbauen. Ein überhöhter Druck, z.B. auf der Niederdruckseite, kann zu einer Beschädigung der Maschinenteile bis zu ihrem Bersten und zu einem Ausfall der Gesamtdichtungsanordnung führen.

Zur Lösung dieses Problems sind diverse Dichtungsanordnungen bekannt. Bei der aus der DE 101 17 662 C1 bekannten Dichtungsanordnung weist die Dichtung zur Druckentlastung Entlastungsbohrungen bzw. -kanäle auf, die vergleichbar einem Rückschlagventil der Druckentlastung dienen. Bei der aus der DE 10 2006 023157 B3 bekannten Dichtungsanordnung sind ein Dichtungsring und mindestens ein Vorspannelement derart in einem Nutraum zwischen den Maschinenteilen angeordnet, dass das Vorspannelement den Dichtungsring sowohl mit einer radialen Kraftkomponente als auch mit einer axialen Kraftkomponente spannt und der Dichtungsring über definierte Anlageflächen an dem zweiten Maschinenteil und der niederdruckseitigen Nutflanke anliegt. Der Dichtungsring weist dabei eine oder mehrere Entlastungsbohrungen bzw. Entlastungskanäle auf, die einerseits im druckbeaufschlagten Zustand der Dichtungsanordnung der Niederdruckseite zugewandte, niederdruckseitige Öffnungen und andererseits hochdruckseitige Öffnungen aufweisen.

Das DE 10117662 repräsentiert den nächstliegenden Stand der Technik gemäß Anspruchs 1.

Der Erfindung liegt die Aufgabe zugrunde, eine alternative Dichtung mit einer Druckentlastungsfunktion sowie eine entsprechende Dichtungsanordnung anzugeben.

Diese Aufgabe wird erfindungsgemäß gelöst durch eine Dichtung der eingangs genannten Art, umfassend:
- einen Dichtring aus elastischem Material zur Anlage an dem zweiten Maschinenteil, und
- eine Vorspanneinrichtung zur Anordnung zwischen dem ersten Maschinenteil und dem Dichtring zur Ausübung einer Vorspannkraft auf den Dichtring, so dass dieser bei normaler Drucklage gegen eine niederdruckseitige Nutflanke der den Einbauraum bildenden Nut und gegen das zweite Maschinenteil gepresst wird,
dadurch gekennzeichnet, dass die Vorspanneinrichtung mindestens einen Entlastungskanal, eine Entlastungsbohrung oder eine Durchdringung aufweist oder teilweise offen mit Durchgängen ausgebildet ist, der bzw. die zumindest bei invertierter Drucklage von der niederdruckseitigen zu der hochdruckseitigen Außenfläche der Vorspanneinrichtung reicht bzw. reichen, so dass die Vorspanneinrichtung zumindest bei invertierter Drucklage zwischen Hochdruckseite und Niederdruckseite nicht abdichtet, und dass der Dichtring so ausgestaltet ist oder die Vorspanneinrichtung so angeordnet ist, dass bei invertierter Drucklage der Überdruck von der Niederdruckseite auf die Hochdruckseite entweichen kann.

Bei der erfindungsgemäß vorgeschlagenen Dichtung weist der aus elastischem (insbesondere zähelastischem) Material gebildete Dichtring also nicht, wie die eingangs genannten Lösungen, Entlastungsbohrungen oder Entlastungskanäle auf, sondern dient allein der Dichtfunktion. Der Dichtring ist somit deutlich einfacher herzustellen (Entlastungsbohrungen im Dichtring erfordern eine hohe Präzision) und stabiler als die bekannten Dichtringe. Die Druckentlastungsfunktion wird erfindungsgemäß über die Vorspanneinrichtung bewirkt, die so ausgestaltet ist, dass sie selbst gegenüber dem Einbauraum und gegenüber dem Dichtring nicht abdichtet, was durch verschiedene Ausgestaltungen erreicht werden kann.

Die Vorspanneinrichtung dient somit bei der erfindungsgemäßen Dichtung nicht nur dazu, bei normaler Drucklage (also wenn auf der Hochdruckseite auch tatsächlich ein höherer Druck anliegt als auf der Niederdruckseite) eine (bevorzugt axial und radial wirkende) Vorspannkraft auf den Dichtring auszuüben, sondern auch im Falle eines Überdrucks (also bei invertierter Drucklage, d.h., wenn auf der Hochdruckseite ein niedrigerer Druck anliegt als auf der Niederdruckseite) eine Druckentlastung von der Niederdruckseite auf die Hochdruckseite zu ermöglichen. Eine solche Ausgestaltung der Dichtung bietet auch die Möglichkeit, die Vorspanneinrichtung aus haltbareren und stabileren Materialien herzustellen, als dies bei den bekannten Dichtungsanordnungen möglich ist, bei denen das dort vorgesehene Vorspannelement ebenfalls zwingend eine Dichtungswirkung aufweisen muss.

In einer Ausgestaltung der erfindungsgemäßen Dichtung ist vorgesehen, dass die Vorspanneinrichtung nicht abdichtend gegenüber dem Dichtring und gegenüber dem Einbauraum ausgestaltet ist. Bei normaler Drucklage dichtet also nur der Dichtring ab. Wenn diese Dichtwirkung bei invertierter Drucklage nicht mehr gewährleistet ist, kann der hohe Druck von der Niederdruckseite auf die Hochdruckseite über die Vorspanneinrichtung entweichen.

In einer bevorzugten Ausgestaltung ist vorgesehen, dass die Vorspanneinrichtung einteilig zur Anlage an einer hochdruckseitigen Nutflanke der den Einbauraum bildenden Nut und einen Nutgrund der Nut und zur gleichzeitigen Ausübung einer Vorspannkraft in axialer und radialer Richtung auf den Dichtring ausgestaltet ist. Bevorzugt weist dabei der Dichtring eine zur Vorspanneinrichtung hinweisende, schräg verlaufende Fläche auf, welche zum Nutgrund hin orientiert ist.

In einer alternativen Ausgestaltung ist vorgesehen, dass die Vorspanneinrichtung zwei- oder mehrteilig ausgebildet ist und mindestens zwei Vorspannelemente aufweist, wobei ein erstes Vorspannelement zur Anlage an einer hochdruckseitigen Nutflanke der den Einbauraum bildenden Nut und zur Ausübung einer Vorspannkraft in axialer Richtung auf den Dichtring ausgestaltet ist und ein zweites Vorspannelement zur Anlage an einen Nutgrund der den Einbauraum bildenden Nut und zur Ausübung einer Vorspannkraft in radialer Richtung auf den Dichtring ausgestaltet ist.

Bei beiden Ausgestaltungen können die (axialen und radialen) Kraftkomponenten durch Variation des Anlagewinkels und durch Verwendung verschiedener Materialien und Ausgestaltungen eingestellt werden. Dabei ist bevorzugt vorgesehen, dass die Vorspanneinrichtung derart ausgestaltet ist, dass bei einer vorbestimmten Druckdifferenz zwischen dem niederdruckseitigen Druck und dem hochdruckseitigen Druck und bei einem hochdruckseitigen Druck, der niedriger ist als der niederdruckseitige Druck, zwischen Dichtring und niederdruckseitiger Nutflanke der den Einbauraum bildenden Nut ein Entlastungspfad für das Entweichen des niederdruckseitigen Überdrucks auf die Hochdruckseite gebildet wird.

Erfindungsgemäß ist vorgesehen, dass die Vorspanneinrichtung mindestens einen von der niederdruckseitigen zu der hochdruckseitigen Außenfläche der Vorspanneinrichtung reichenden Entlastungskanal oder Entlastungsbohrung aufweist. Die Vorspanneinrichtung kann dabei als einteiliges, beispielsweise gummielastisches, Formteil ausgebildet sein. Beispielsweise könnte die Vorspanneinrichtung ein O-Ring mit Ausbrüchen, Notches oder dergleichen sein.

Erfindungsgemäß ist ferner vorgesehen, dass die Vorspanneinrichtung als teilweise offene, Durchgänge von der niederdruckseitigen zu der hochdruckseitigen Außenfläche der Vorspanneinrichtung bildende Einrichtung gebildet ist. Auch bei dieser Ausgestaltung kann die Vorspanneinrichtung ein- oder mehrteilig ausgebildet sein, beispielsweise als federelastisches Element mit offener Struktur, etwa in Form einer Spiralfeder, die auch metallisch ausgebildet sein kann. Die Verwendung von Metall hat dabei insbesondere den Vorteil, dass es weniger altert als die üblichen Dichtungswerkstoffe, besser haltbar ist und größere (chemische und thermische) Stabilität aufweist als etwa Elastomere.

Bevorzugt ist ferner bei einer Ausgestaltung der Vorspanneinrichtung aus Metall, dass die Vorspanneinrichtung zudem eine elektrisch isolierende Beschichtung aufweist, um Kontaktkorrosion mit dem Einbauraum bzw. dem ersten Maschinenteil zu vermeiden. Dafür könne beispielsweise eine allgemein bekannte, fest anhaftende Gleitbeschichtung eingesetzt werden.

In einer Ausgestaltung der Dichtung ist vorgesehen, die Vorspanneinrichtung derart ausgestaltet ist, dass sich bei normaler Drucklage gegenüber dem Dichtring und gegenüber dem Einbauraum abdichtet und bei invertierter Drucklage gegenüber dem Dichtring und/oder gegenüber dem Einbauraum nicht abdichtet. Eine solche Vorspanneinrichtung ist beispielsweise in Form einer Lippendichtung ausgestaltet. Bei invertierter Drucklage kann sich dann ein Entlastungskanal zwischen der Hochdruckseite und der Niederdruckseite öffnen, über den der Druck entweichen kann.

Bevorzugt ist in einer weiteren Ausgestaltung vorgesehen, dass der Dichtring eine erste niederdruckseitige und/oder eine zweite hochdruckseitige, zur Anlage an dem zweiten Maschinenteil vorgesehene Dichtfläche aufweist, wobei die erste niederdruckseitige Dichtfläche unter einem niederdruckseitigen Dichtkantenwinkel von 5°-12°, insbesondere 7°, und die zweite hochdruckseitige Dichtfläche unter einem hochdruckseitigen Dichtkantenwinkel von 40°-60°, insbesondere 55°, zur Oberfläche des zweiten Maschinenteils verläuft. Durch eine derartige Ausgestaltung wird eine bestmögliche dynamische Rückförderung erreicht. Bei geringeren Anforderungen an das Rückförderverhalten kann die Geometrie aber auch weniger stark Schmierfilm-abstreifend geformt sein. Ferner kann für eine Hochdruckvariante der Dichtung ein entsprechender Stützring zusätzlich vorgesehen sein). Ein solcher Stützring wird bei hohen hydraulischen Drücken eingesetzt, um eine Extrusion des (zähelastischen) Dichtrings in den Zwischenraum zwischen Primär- und Sekundärdichtung zu verhindern. Der Stützring, welcher im Allgemeinen aus einem deutlich steiferen Werkstoff als der Dichtring besteht, wird in einer dem Dichtspalt zugwandten Ausnehmung des Dichtrings platziert.

Die Erfindung betrifft auch eine Dichtungsanordnung mit einem ersten, insbesondere ruhenden, Maschinenteil mit einem durch eine Nut gebildeten Einbauraum, einem zweiten, insbesondere beweglichen, Maschinenteil und einer in den Einbauraum eingesetzten Dichtung der erfindungsgemäßen Art zur Abdichtung einer Hochdruckseite gegenüber einer Niederdruckseite. Die erfindungsgemäße Dichtung wird dabei insbesondere als Stangen- oder Kolbenprimärdichtung eingesetzt, die dem abzudichtenden Raum zugewandt ist, wobei zusätzlich eine Sekundärdichtung auf der davon abgewandten Seite vorgesehen ist. Die erfindungsgemäße Dichtung kann beispielsweise als Primärdichtung in einem Stangendichtsatz, wie er von der Anmelderin unter der Bezeichnung "Polon-Stangendichtsatzprofil OD" vertrieben wird, eingesetzt werden.

Die Erfindung wird nachfolgend anhand der Zeichnungen näher erläutert. Es zeigen:
- Fig. 1: eine prinzipielle Darstellung einer erfindungsgemäßen Dichtungsanordnung,
- Fig. 2: einen Querschnitt durch eine erste Ausführungsform einer erfindungsgemäßen Dichtung in eingebautem Zustand im Normalbetrieb,
- Fig. 3: einen Querschnitt durch die erste Ausführungsform in einer Überdrucksituation,
- Fig. 4: eine vergrößerte Darstellung eines Querschnitts durch die in Fig. 2 gezeigte Dichtung,
- Fig. 5: eine zweite Ausführungsform einer erfindungsgemäßen Dichtung mit einem zusätzlichen Stützring,
- Fig. 6: eine dritte Ausführungsform einer erfindungsgemäßen Dichtung mit einer Vorspanneinrichtung in Form einer Lippendichtung,
- Fig. 7: eine vierte Ausführungsform einer erfindungsgemäßen Dichtung mit einer Vorspanneinrichtung in Form einer spiralförmigen Feder,
- Fig. 8: eine Ausführungsform einer einteiligen Vorspanneinrichtung,
- Fig. 9: eine fünfte Ausführungsform einer erfindungsgemäßen Dichtung in eingebautem Zustand,
- Fig. 10: eine sechste Ausführungsform einer erfindungsgemäßen Dichtung in eingebautem Zustand,
- Fig. 11: eine weitere Ausführungsform einer erfindungsgemäßen Vorspanneinrichtung, und
- Fig. 12: eine Ausführungsform einer erfindungsgemäßen, bei den in den Figuren 2 bis 5 gezeigten Dichtungen eingesetzten Vorspanneinrichtung.

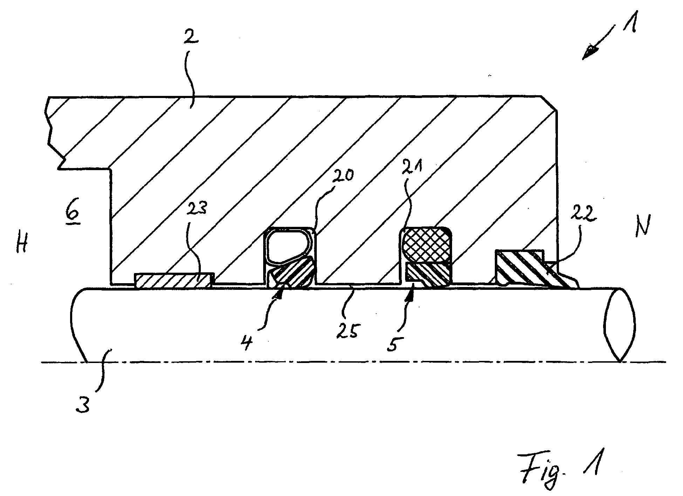

Fig. 1 zeigt einen Querschnitt durch eine erste Ausgestaltung einer erfindungsgemäßen Dichtungsanordnung 1. Diese umfasst ein erstes (ruhendes) Maschinenteil 2, beispielsweise einen Zylinder, und ein zweites (bewegliches) Maschinenteil 3, beispielsweise einen darin verfahrbaren Kolben. Es sei an dieser Stelle darauf hingewiesen, dass es grundsätzlich nur auf die Relativ-Beweglichkeit der beiden Maschinenteile 2 und 3 zueinander ankommt. Dieselbe erfindungsgemäße Dichtung kann in Dichtungsanordnungen auch eingesetzt werden, bei denen das Maschinenteil 3 ruht und das Maschinenteil 2 beweglich ist.

In dem ruhenden Maschinenteil 2 ist durch eine umlaufende Nut ein erster Einbauraum 20 gebildet, in dem eine ringförmig umlaufende Primärdichtung 4 eingebaut ist. Ferner ist davon beabstandet ein zweiter Einbauraum 21 in dem ruhenden Maschinenteil 2 gebildet, in dem eine Sekundärdichtung 5 eingebaut ist. Die Primärdichtung 2 ist einem abzudichtenden Raum 6 zugewandt, auf dem grundsätzlich ein hoher Druck anliegt und der auch als Hochdruckseite H bezeichnet wird. Die Sekundärdichtung 5 ist der Niederdruckseite N zugewandt, auf der grundsätzlich ein geringerer Druck als auf der Hochdruckseite H anliegt.

Die Sekundärdichtung 5 kann beispielsweise als Dichtkantenring oder als Lippendichtung ausgestaltet sein, wobei die konkrete Ausgestaltung sich nach dem jeweiligen Anwendungsfall richtet und ansonsten für die vorliegende Erfindung nicht von besonderer Bedeutung ist. Die hauptsächliche Dichtwirkung wird durch die Primärdichtung 4 erreicht, die das Kernelement der vorliegenden Erfindung darstellt und deren Details nachfolgend erläutert werden.

Ferner sind in Fig. 1 in dem ruhenden Maschinenteil Einbauräume für ein Abstreifelement 22 sowie für Führungselemente 23 dargestellt, wie sie häufig bei derartigen Dichtungsanordnungen verwendet werden.

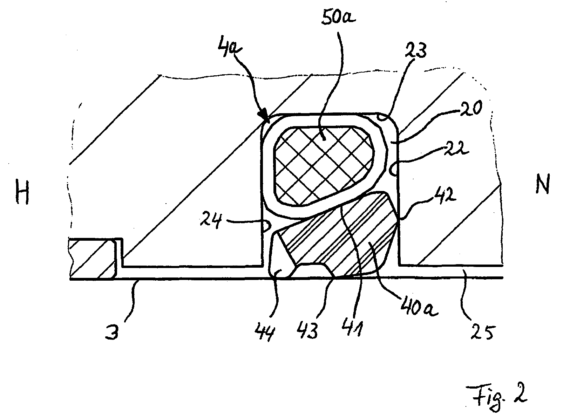

Fig. 2 zeigt einen Querschnitt durch eine erste Ausgestaltung einer erfindungsgemäßen Dichtung 4a bei in den Einbauraum 20 eingebautem Zustand bei "normaler" Druckbeaufschlagung. Die Dichtung 4a umfasst einen Dichtring 40a und eine Vorspanneinrichtung 50a. Der Dichtring 40a ist aus elastischem Material hergestellt und liegt sowohl an dem beweglichen Maschinenteil 3 als auch dem ruhenden Maschinenteil 2 an und bewirkt dadurch die Abdichtung zwischen der Hochdruckseite H und der Niederdruckseite N. Die Vorspanneinrichtung 50a ist zwischen dem ruhenden Maschinenteil 2 und dem Dichtring 40a angeordnet und übt eine Vorspannkraft in axialer und radialer Richtung auf den Dichtring 40a aus, so dass dieser gegen die niederdruckseitige Nutflanke 22 der Nut und gegen das bewegliche Maschinenteil 3 gepresst wird. Die Vorspanneinrichtung 50a ist nicht abdichtend gegenüber dem Dichtring 40a und gegenüber dem Einbauraum 20 ausgestaltet.

Um sowohl eine Kraftkomponente in axialer als auch in radialer Richtung bei dieser einteiligen Ausgestaltung der Vorspanneinrichtung 50a auf den Dichtring 40a auszuüben, weist der Dichtring 40a an seiner der Vorspanneinrichtung 50a zugewandten Oberseite eine schräg verlaufende Anlagefläche 41 auf, die zum Nutgrund 23 hin (in Richtung zur Niederdruckseite N) schräg verläuft. Durch Variation des Anlagewinkels, also des Verlaufs der schrägen Anlagefläche 41, und durch Verwendung unterschiedlicher Materialien und Ausgestaltungen der Vorspanneinrichtung 50a und des Dichtrings 40a können dabei die axialen und radialen Kraftkomponenten eingestellt werden. Grundsätzlich erfolgt dies so, dass im (in Fig. 2 gezeigten) "normalen" Betrieb, bei dem auf der Hochdruckseite H ein höherer Druck anliegt als auf der Niederdruckseite N, die Dichtwirkung durch den Dichtring 40a erreicht wird. Bei der gezeigten Ausgestaltung des Dichtrings 40a liegt dazu eine statische Dichtkante 42 an der niederdruckseitigen Nutkante 22 an, und eine dynamische Dichtkante 43 liegt an dem beweglichen Maschinenteil 3 an.

Zusätzlich ist bei dieser Ausgestaltung des Dichtrings 40a noch ein Stützfuß 44 auf der der Hochdruckseite H zugewandten Seite vorgesehen, der an der hochdruckseitigen Nutflanke 24 und an dem beweglichen Maschinenteil 3 anliegt. Der Stützfuß 44 hat die Aufgabe, dem Dichtungsprofil eine stabilere Lage bei invertierter Druckbeaufschlagung zu verleihen. An mindestens einer Stelle ist der Stützfuß 44 meist durch eine Ausnehmung so unterbrochen, dass der Raum vor der Dichtkante 43 mit der Hochdruckseite H sowie der Raum oberhalb des Dichtrings 40a ebenfalls mit der Hochdruckseite H kommunizieren können, um den Rückfluss auf die originäre Hochdruckseite bei invertierter Drucklage zu ermöglichen.

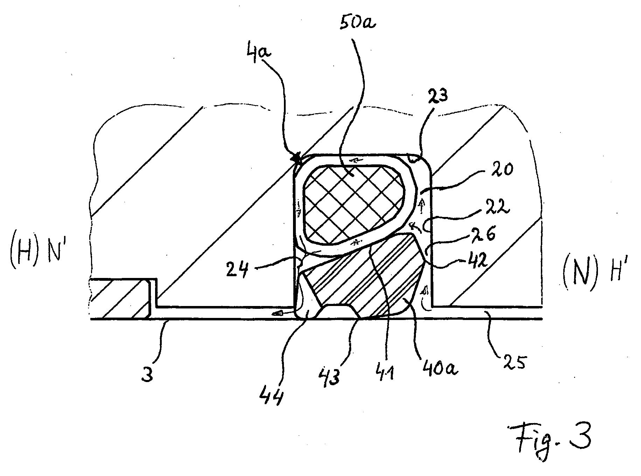

Bei invertierter Drucklage, also wenn der Druck auf der Niederdruckseite N höher ist als der Druck auf der Hochdruckseite H, also insbesondere in dem Zwischenraum 25 zwischen der Primärdichtung 4a und der Sekundärdichtung 5 (oft als Zwischendichtungsdruck bezeichnet), so wirkt dieser Überdruck gegen die axiale Kraftkomponente der Vorspanneinrichtung 50a und schiebt den Dichtring 40a axial von der druckabgewandten Nutflanke 22 weg, wie in Fig. 3 gezeigt ist (dort ist die invertierte Drucklage durch die Angaben H' und N' angedeutet). Da die Vorspanneinrichtung 50a selbst nicht abdichtet, kann dann der Überdruck bzw. in dem Zwischenraum 25 angestaute Druckflüssigkeit über den Entlastungspfad 26 zwischen der statischen Dichtkante 42 und der druckabgewandten Nutflanke 22 und über die Vorspanneinrichtung 50a zur Hochdruckseite H hin entweichen (wie durch die Pfeile angedeutet), so dass sich dann wieder der normale Betriebszustand (wie in Fig. 2 gezeigt) einstellt.

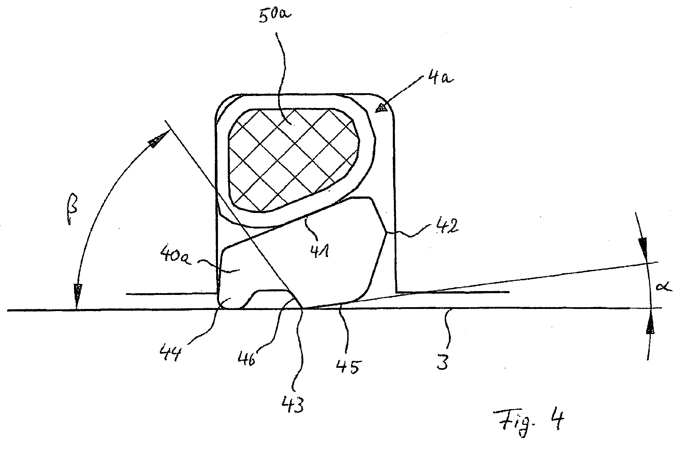

Ein Querschnitt durch die erste Ausführungsform der Dichtung 4a ist nochmals in Fig. 4 vergrößert gezeigt. Dort ist auch erkennbar, dass der Dichtring 40a eine erste niederdruckseitige Dichtfläche 45 und eine zweite hochdruckseitige Dichtfläche 46 aufweist, wobei die erste niederdruckseitige Dichtfläche 45 unter einem niederdruckseitigen Dichtkantenwinkel α, der im Bereich von 5°-12°, beispielsweise 7°, liegt, und wobei die zweite hochdruckseitige Dichtfläche 46 unter einen hochdruckseitigen Dichtkantenwinkel β von 40°-60°, beispielsweise 55°, zur Oberfläche des beweglichen Maschinenteils verläuft. Dadurch wird eine bestmögliche dynamische Rückförderung des Schmiermittels erreicht. Wenn zudem ein noch stärkerer Wert auf eine möglichst geringe Reibung und beste Schmierung gelegt wird, kann die Geometrie auch entsprechend weniger stark abstreifend geformt werden.

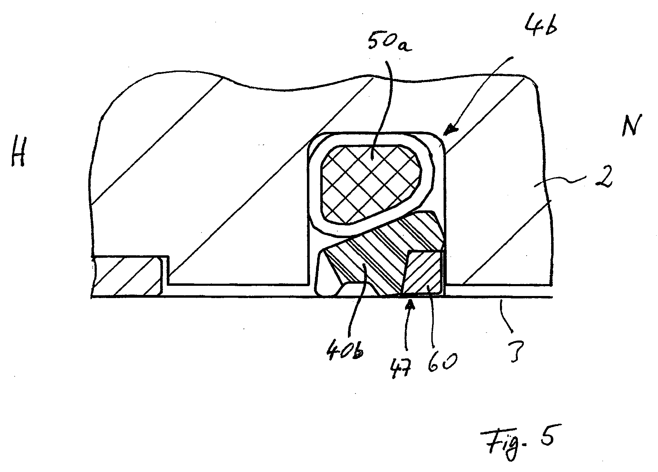

Fig. 5 zeigt eine zweite Ausführungsform einer erfindungsgemäßen Dichtung 4b, die ähnlich aufgebaut ist wie die in den Figuren 2 bis 4 gezeigte Dichtung 4a. Allerdings ist der Dichtring 40b auf der Niederdruckseite N zuweisenden Seite geringfügig anders ausgestaltet und weist eine Ausnehmung 47 auf. In dieser Ausnehmung 47 ist bei dieser Dichtung 4b ein Stützring 60 angeordnet, der den Dichtspalt zwischen ruhendem Maschinenteil 2 und bewegtem Maschinenteil 3 verschließt.

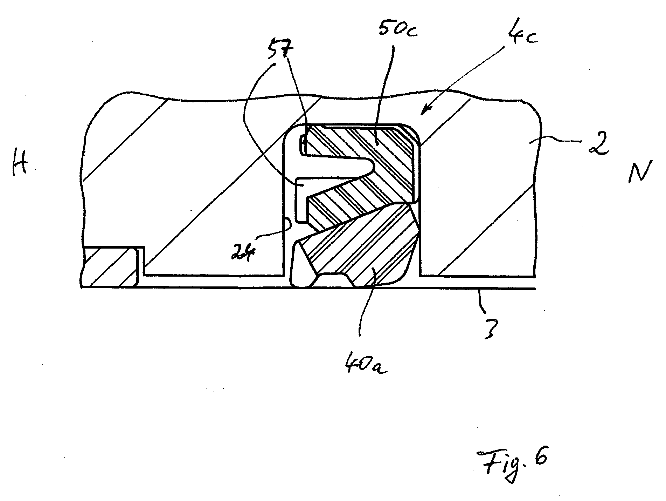

Fig. 6 zeigt eine dritte Ausführungsform einer erfindungsgemäßen Dichtung 4c, bei der eine Vorspanneinrichtung 50c in Form einer Lippendichtung verwendet wird. Die Verwendung einer solchen Lippendichtung als Vorspanneinrichtung hat den Vorteil, dass diese sowohl nicht dichtend, z.B. mit einer oder mehreren Durchdringungen oder Bohrungen, als auch, wie in Fig. 6 angedeutet, einseitig, insbesondere hochdruckseitig, dichtend ausgestaltet sein kann. Im zweiten Fall kann bei invertierter Drucklage eine Dichtlippe durch den rückseitigen Hochdruck durch entsprechende Entlastungskanäle so elastisch angehoben werden, dass der Überdruck entweichen kann. In diesem zweiten Fall ist auch eine axiale Kraftkomponente der Vorspanneinrichtung nicht zwingend erforderlich. Durch (nicht abdichtende) Abstandshalter 57 am hochdruckseitigen Ende der beiden Dichtlippen der Lippendichtung 50c wird dabei gewährleistet, dass keine Abdichtung zwischen der Lippendichtung 57 und dem Einbauraum erfolgt, wenn die Lippendichtung 50c bei invertierter Drucklage gegen den hochdruckseitige Nutflanke 24 gedrückt wird.

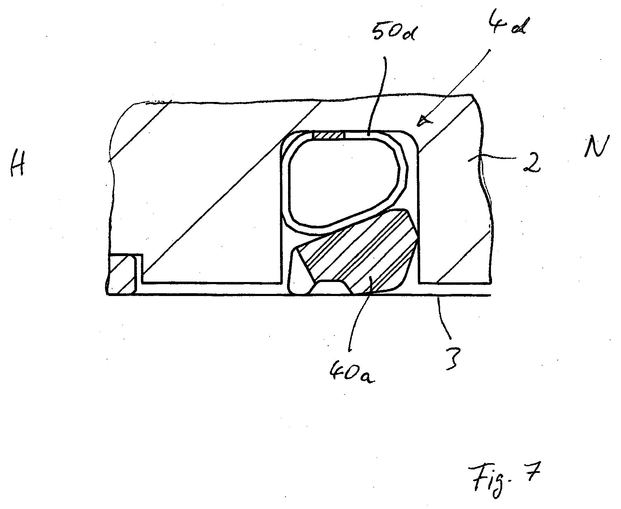

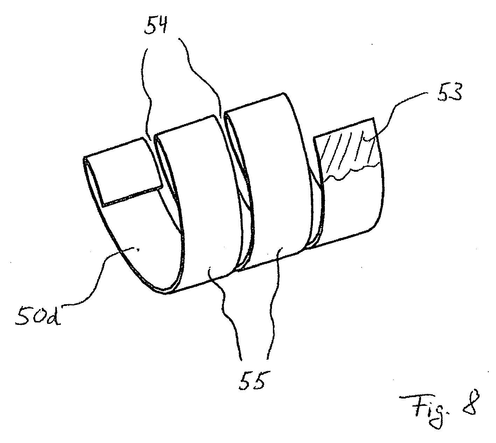

Fig. 7 zeigt eine vierte Ausführungsform einer erfindungsgemäßen Dichtung 4d, bei der eine einteilige Vorspanneinrichtung 50d in Form einer metallischen Spiralfeder verwendet wird. Eine solche Vorspanneinrichtung 50d ist separate in Fig. 8 gezeigt. Diese ist als metallisches Federelement, hier als metallische Spiralfeder, ausgestaltet. Durch die Abstände 54 zwischen den einzelnen Spiralgängen 55 kann im beschriebenen Überdruckfall die Druckflüssigkeit zur Hochdruckseite hin entweichen. Eine einteilige Vorspanneinrichtung kann natürlich auch aus anderen Materialien und in anderer struktureller Ausgestaltung geformt sein, solange einerseits die Aufbringung einer axialen und radialen Kraftkomponente auf den Dichtring gewährleistet ist und andererseits keine abdichtende Wirkung erzielt wird, um im Überdruckfall die gewünschte Druckentlastung über die Vorspanneinrichtung ermöglichen zu können.

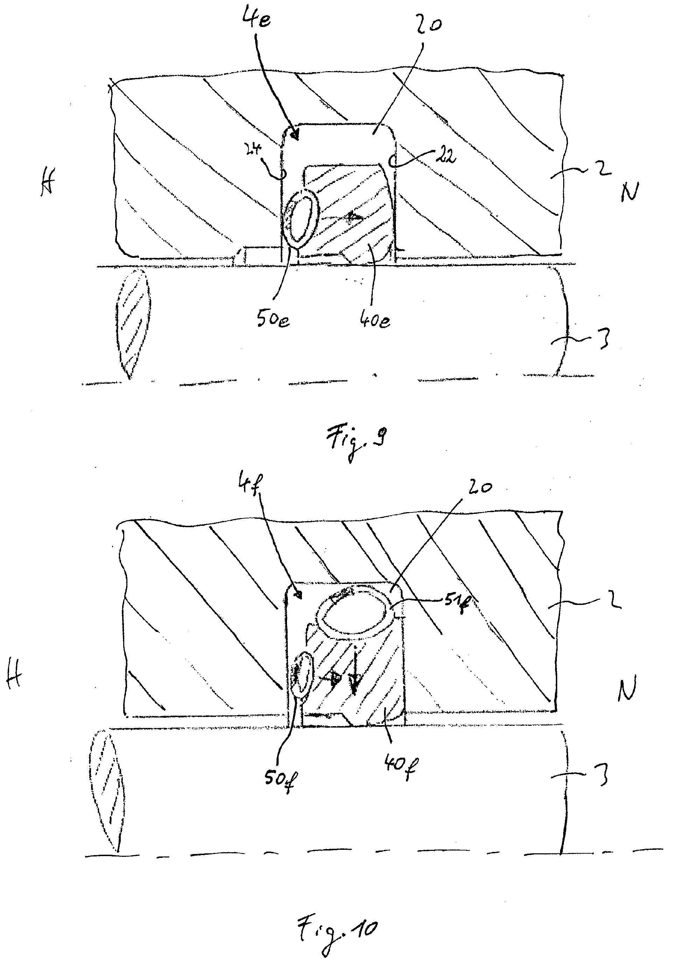

Eine fünfte Ausführungsform einer erfindungsgemäßen Dichtung 4e ist in Fig. 9 gezeigt. Dort ist eine Vorspanneinrichtung 50e eingesetzt, die als einzelnes Vorspannelement ausgebildet ist, das zwischen die hochdruckseitige Nutflanke 24 und den Dichtring 40e geklemmt ist. Dadurch bringt das Vorspannelement 50e, das beispielsweise als Spiralfeder ausgebildet sein kann, eine axiale Kraftkomponente auf den Dichtring 40e auf, dass dieser an die niederdruckseitige Nutflanke 22 angedrückt wird und somit die gewünschte Dichtwirkung bewirkt. Eine radiale, elastische Aufdehnung des Dichtrings 40e gewährleistet in diesem Fall die Anpressung zur Abdichtung gegenüber dem bewegten Maschinenteil 3. Im Falle einer Überdrucksituation, wie oben beschrieben, wird der Dichtring 40e dann in Richtung Hochdruckseite gedrückt, so dass der Überdruck über den Entlastungspfad zwischen niederdruckseitiger Nutflanke 22 und Dichtring 40e und über das Vorspannelement 50e entweichen kann.

Fig. 10 zeigt eine sechste Ausgestaltung einer erfindungsgemäßen Dichtung 4f. Bei dieser Ausgestaltung weist die Vorspanneinrichtung zwei separate Vorspannelemente 50f, 51f auf, wobei das erste Vorspannelement 50f im Wesentlichen eine axiale Kraftkomponente auf den Dichtring 40f aufbringt, während das zweite Vorspannelement 51f im Wesentlichen eine radiale Kraftkomponente auf den Dichtring 40f aufbringt. Im Falle einer Überdrucksituation wird der Dichtring 40f gegen das erste Vorspannelement 50f gedrückt, so dass über den beschriebenen Entlastungspfad, das zweite Vorspannelement 51f und das erste Vorspannelement 50f der Überdruck entweichen kann.

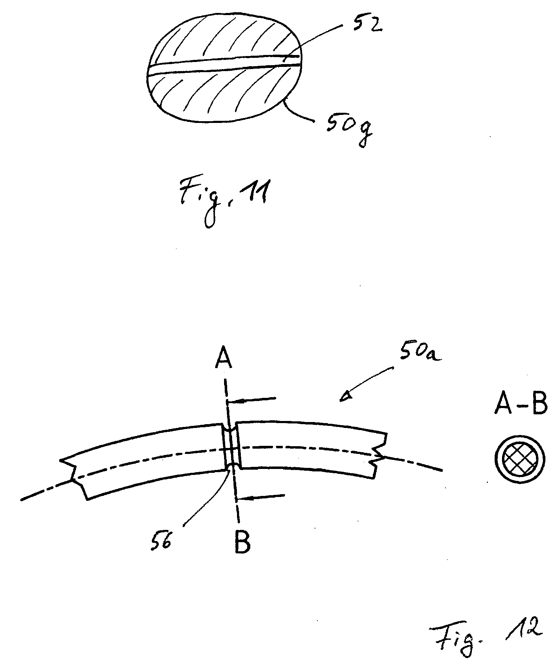

Für die Vorspanneinrichtung sind unterschiedlichste Ausgestaltungen denkbar. Wesentlich ist, dass eine ausreichende axiale und radiale Kraftkomponente auf den Dichtring ausgeübt werden kann und dass über die Vorspanneinrichtung ein Überdruck in der beschriebenen Überdrucksituation entweichen kann. Beispielsweise kann, wie in der in Fig. 11 gezeigten Ausführungsform erkennbar ist, die Vorspanneinrichtung auch als gummielastisches Formteil 50g mit Entlastungsbohrungen 52 oder Entlastungskanälen, z.B. ein O-Ring mit Ausbrüchen oder Notches, sein. Ferner können auch mehr als zwei Vorspannelemente vorgesehen sein, oder die Vorspanneinrichtung kann statt eines ringförmig ausgestalteten Elements mehrere Teile umfassen, zwischen denen der Überdruck entweichen kann.

Fig. 12 zeigt eine Seitenansicht und einen Querschnitt einer Vorspanneinrichtung 50a, wie sie bei den in den Figuren 2 bis 5 gezeigten Dichtungen 4a, 4b Verwendung findet. Es handelt sich hierbei um ein elastisches verpresstes Element, welches mindestens eine umlaufende Ausnehmung 56 aufweist und dadurch eine Druckentlastung bei invertierter Drucklage ermöglicht.

Ferner ist bei Verwendung eines metallischen Vorspannelements bevorzugt vorgesehen, dass dieses mit einer fest anhaftenden Beschichtung 53 (siehe Fig. 8, in der diese Beschichtung bereichsweise angedeutet ist) überzogen ist. Diese Beschichtung 53 enthält beispielsweise ein elektrisch isolierendes Material, um Kontaktkorrosion mit dem Einbauraum zu vermeiden, und/oder ist aus einem Material, um den Verschleiß zu mindern. Dazu kann beispielsweise eine bekannte fest anhaftende Gleitbeschichtung verwendet werden.

Die erfindungsgemäße Dichtung kann vorzugsweise bei Stangendichtsystemen in Hydraulikzylindern eingesetzt werden, in denen ein Zwischendichtungsdruckaufbau denkbar ist. Dies ist insbesondere bei bestimmten Verfahrweisen eines Hydraulikzylinders möglich, nämlich insbesondere bei stark unterschiedlichen Aus- und Einfahrgeschwindigkeiten, sehr langen Hüben oder nach einem Dichtungsausfall aufgrund von Zwischendichtungsdruck.

## Patentansprüche

1. Dichtung zur Aufnahme in einem Einbauraum (20) zwischen einem ersten, insbesondere ruhenden, Maschinenteil (2) und einem zweiten, insbesondere beweglichen, Maschinenteil (3) zur Abdichtung einer Hochdruckseite (H) gegenüber einer Niederdruckseite (N), wobei der Einbauraum durch eine Nut in dem ersten Maschinenteil (2) gebildet ist, umfassend:
- einen Dichtring (40a, 40b, 40e, 40f) aus elastischem Material zur Anlage an dem zweiten Maschinenteil (3), und
- eine Vorspanneinrichtung (50a-50g) zur Anordnung zwischen dem ersten Maschinenteil und dem Dichtring zur Ausübung einer Vorspannkraft auf den Dichtring, so dass dieser bei normaler Drucklage gegen eine niederdruckseitige Nutflanke (22) der den Einbauraum (20) bildenden Nut und gegen das zweite Maschinenteil (3) gepresst wird,
**dadurch gekennzeichnet, dass** die Vorspanneinrichtung mindestens einen Entlastungskanal (52), eine Entlastungsbohrung oder eine Durchdringung aufweist oder teilweise offen mit Durchgängen (54) ausgebildet ist, der bzw. die zumindest bei invertierter Drucklage von der niederdruckseitigen zu der hochdruckseitigen Außenfläche der Vorspanneinrichtung reicht bzw. reichen, so dass die Vorspanneinrichtung zumindest bei invertierter Drucklage zwischen Hochdruckseite (H) und Niederdruckseite (N) nicht abdichtet, und dass der Dichtring so ausgestaltet ist oder die Vorspanneinrichtung so angeordnet ist, dass bei invertierter Drucklage der Überdruck von der Niederdruckseite (N) auf die Hochdruckseite (H) entweichen kann.

2. Dichtung nach Anspruch 1, **dadurch gekennzeichnet, dass** die Vorspanneinrichtung (50a, 50b, 50d-50g) nicht abdichtend gegenüber dem Dichtring und gegenüber dem Einbauraum ausgestaltet ist.

3. Dichtung nach Anspruch 1 oder 2, **dadurch gekennzeichnet, dass** die Vorspanneinrichtung (50a-50e, 50g) einteilig zur Anlage an einer hochdruckseitigen Nutflanke (24) der den Einbauraum (20) bildenden Nut und einen Nutgrund (23) der Nut und zur gleichzeitigen Ausübung einer Vorspannkraft in axialer und radialer Richtung auf den Dichtring (40a, 40b, 40e) ausgestaltet ist.

4. Dichtung nach Anspruch 1 oder 2, **dadurch gekennzeichnet, dass** die Vorspanneinrichtung (50f, 51f) zwei- oder mehrteilig ausgebildet ist und mindestens zwei Vorspannelemente (50f, 51f) aufweist, wobei ein erstes Vorspannelement (50f) zur Anlage an einer hochdruckseitigen Nutflanke (24) der den Einbauraum (20) bildenden Nut und zur Ausübung einer Vorspannkraft in axialer Richtung auf den Dichtring (40f) ausgestaltet ist und ein zweites Vorspannelement (51f) zur Anlage an einen Nutgrund (23) der den Einbauraum (20) bildenden Nut und zur Ausübung einer Vorspannkraft in radialer Richtung auf den Dichtring (40f) ausgestaltet ist.

5. Dichtung nach einem der vorstehenden Ansprüche, **dadurch gekennzeichnet, dass** die Vorspanneinrichtung als metallische Feder (50d), insbesondere als Spiralfeder oder V-förmigen Feder, ausgebildet ist.

6. Dichtung nach einem der vorstehenden Ansprüche, **dadurch gekennzeichnet, dass** die Vorspanneinrichtung (50a-50g) derart ausgestaltet ist, dass bei einer vorbestimmten Druckdifferenz zwischen dem niederdruckseitigen Druck und dem hochdruckseitigen Druck und bei einem hochdruckseitigen Druck, der niedriger ist als der niederdruckseitige Druck, zwischen Dichtring (40a, 40b, 40e, 40f) und niederdruckseitiger Nutflanke (22) der den Einbauraum (20) bildenden Nut ein Entlastungspfad (26) für das Entweichen des niederdruckseitigen Überdrucks auf die Hochdruckseite gebildet wird.

7. Dichtung nach einem der vorstehenden Ansprüche, **dadurch gekennzeichnet, dass** die Vorspanneinrichtung (50d) aus Metall gebildet ist und eine elektrisch isolierende und/oder verschleißmindernde Beschichtung (53) aufweist.

8. Dichtung nach Anspruch 1, **dadurch gekennzeichnet, dass** die Vorspanneinrichtung (50c) derart ausgestaltet ist, dass sich bei normaler Drucklage gegenüber dem Dichtring und gegenüber dem Einbauraum abdichtet und bei invertierter Drucklage gegenüber dem Dichtring und/oder gegenüber dem Einbauraum nicht abdichtet.

9. Dichtung nach Anspruch 8, **dadurch gekennzeichnet, dass** die Vorspanneinrichtung (50c) in Form einer Lippendichtung ausgestaltet ist.

10. Dichtung nach einem der vorstehenden Ansprüche, **dadurch gekennzeichnet, dass** zwischen dem Dichtring (40b), dem ruhenden Maschinenteil (2) und dem beweglichen Maschinenteil (3) ein Stützring (60) angeordnet ist.

11. Dichtung nach einem der vorstehenden Ansprüche, **dadurch gekennzeichnet, dass** der Dichtring (40a) eine erste niederdruckseitige und/oder eine zweite hochdruckseitige, zur Anlage an dem zweiten Maschinenteil (3) vorgesehene Dichtfläche (44, 45) aufweist, wobei die erste niederdruckseitige Dichtfläche (44, 45) unter einem niederdruckseitigen Dichtkantenwinkel (α) von 5°-12°, insbesondere 7°, und die zweite hochdruckseitige Dichtfläche (44) unter einem hochdruckseitigen Dichtkantenwinkel (β) von 40°-60°, insbesondere 55°, zur Oberfläche des zweiten Maschinenteils (3) verläuft.

12. Dichtungsanordnung mit:
- einem ersten, insbesondere ruhenden, Maschinenteil (2) mit einem durch eine Nut gebildeten Einbauraum (20),
- einem zweiten, insbesondere beweglichen, Maschinenteil (3) und
- einer in den Einbauraum (20) eingesetzten Dichtung (4a, 4b, 4e, 4f) nach einem der vorstehenden Ansprüche zur Abdichtung einer Hochdruckseite (H) gegenüber einer Niederdruckseite (N).

## Claims

1. Seal for reception in an installation space (20) between a first, in particular stationary, machine part (2) and a second, in particular movable, machine part (3) for sealing a high-pressure side (H) with respect to a low-pressure side (N), wherein the installation space is formed by a groove in the first machine part (2), including:
- a sealing ring (40a, 40b, 40e, 40f) made of resilient material for installation on the second machine part (3), and
- a pre-tensioning device (50a-50g) for arrangement between the first machine part and the sealing ring for exerting a pre-tensioning force to the sealing ring, so that it is pressed at normal pressure situation against a low-pressure side groove flank (22) of the groove forming the installation space (20) and against the second machine part (3),
**characterized in that** the pre-tensioning device comprises at least one relief channel (52), a relief bore or a penetration or is formed partially open with passages (54), which extends or extend at least at inverse pressure situation from the low-pressure side to the high-pressure side outer face of the pre-tensioning device, so that the pre-tensioning device does not seal, at least at inverse pressure situation, between high-pressure side (H) and low-pressure side (N) and that the sealing ring is configured or the pre-tensioning device is arranged such that at inverse pressure situation the excessive pressure can escape from the low-pressure side (N) to the high-pressure side (H).

2. Seal according to claim 1, **characterized in that** the pre-tensioning device (50a, 50b, 50d-50g) is configured non-sealing with respect to the sealing ring and with respect to the installation space.

3. Seal according to claim 1 or 2, **characterized in that** the pre-tensioning device (50a-50e, 50g) is configured in one piece for installation at a high-pressure side groove flank (24) of the groove forming the installation space (20) and a groove base (23) of the groove and for simultaneously exerting a pre-tensioning force in axial and radial direction on the sealing ring (40a, 40b, 40e).

4. Seal according to claim 1 or 2, **characterized in that** the pre-tensioning device (50f, 51f) is formed two- or multi-part and comprises at least two pre-tensioning elements (50f, 51f), wherein a first pre-tensioning element (50f) is configured for installation at a high-pressure side groove flank (24) of the groove forming the installation space (20) and for exerting a pre-tensioning force in axial direction on the sealing ring (40f) and a second pre-tensioning element (51f) is configured for installation at a groove base (23) of the groove forming the installation space (20) and for exerting a pre-tensioning force in radial direction on the sealing ring (40f).

5. Seal according to one of the preceding claims, **characterized in that** the pre-tensioning device is configured as metallic spring (50d), in particular as a spiral spring or V-shaped spring.

6. Seal according to one of the preceding claims, **characterized in that** the pre-tensioning device (50a-51g) is configured such that in case of a predetermined pressure difference between the low-pressure side pressure and the high-pressure side pressure and in case of a high-pressure side pressure, which is lower than the low-pressure side pressure, a relief path (26) is formed between sealing ring (40a, 40b, 40e, 40f) and low-pressure side groove flank (22) of the groove forming the installation space (20) for the escape of the low-pressure side overpressure on the high-pressure side.

7. Seal according to one of the preceding claims, **characterized in that** the pre-tensioning device (50d) is formed from metal and comprises an electrically insulating and/or wear-reducing coating (53).

8. Seal according to claim 1, **characterized in that** the pre-tensioning device (50c) is configured such that at normal pressure situation it seals with respect to the sealing ring and the installation space and that at inverse pressure situation it does not seal with respect to the sealing ring and/or the installation space.

9. Seal according to claim 8, **characterized in that** the pre-tensioning device (50c) is configured in the form of a lip seal.

10. Seal according to one of the preceding claims, **characterized in that** a support ring (60) is arranged between the sealing ring (40b), the stationary machine part (2) and the movable machine part (2).

11. Seal according to one of the preceding claims, **characterized in that** the sealing ring (40a) comprises a first low-pressure side and/or a second high-pressure side sealing surface (44,45) for attachment at the second machine part (3), wherein the first low-pressure side sealing surface (44,45) runs under a low-pressure side sealing edge angle (α) of 5°-12°, in particular 7°, and the second high-pressure side sealing surface (44) runs under a high-pressure side sealing edge angle (β) of 40°-60°, in particular 55°, to the surface of the second machine part (3).

12. Seal assembly comprising:
- a first, in particular stationary, machine part (2) with an installation space (20) formed by a groove.
- a second, in particular movable, machine part (3) and
- a seal (4a, 4b, 4e, 4f) according to one of the preceding claims, inserted into the installation space (20), for sealing a high-pressure side (H) with respect to a low-pressure side (N).

## Revendications

1. Joint destiné à être logé dans un espace de montage (20) entre une première pièce de machine (2), notamment immobile et une deuxième pièce de machine (3), notamment mobile pour assurer l'étanchéité d'un côté haute pression (H) par rapport à un côté basse pression (N), l'espace de montage étant formé par une rainure dans la première pièce de machine (2), comprenant :
- une bague d'étanchéité (40a, 40b, 40e, 40f) en une matière élastique, destinée à être appuyée sur la deuxième pièce de machine (3) et
- un dispositif de précontrainte (50a à 50g) destiné à être placé entre la première pièce de machine et la bague d'étanchéité pour exercer une force de précontrainte sur la bague d'étanchéité, de sorte que dans des conditions de pression normale, celle-ci soit pressée contre un flanc de rainure (22) côté basse pression de la rainure formant l'espace de montage (20) et contre la deuxième pièce de machine (3),
**caractérisé en ce que** le dispositif de précontrainte comporte au moins un canal de décharge (52), un perçage de décharge ou une pénétration ou est conçu en étant partiellement ouvert, avec des passages (54), lequel, laquelle ou lesquels, au moins dans des conditions de pression inversées arrive ou arrivent de la surface extérieure côté basse pression jusqu'à la surface extérieure côté haute pression du dispositif de précontrainte, de sorte qu'au moins dans des conditions de pression inversées, le dispositif de précontrainte n'assure pas l'étanchéité entre le côté haute pression (H) et le côté basse pression (N) et **en ce que** la bague d'étanchéité est conçue de telle sorte ou le dispositif de précontrainte est placé de telle sorte que dans des conditions de pression inversées, la surpression puisse s'échapper du côté basse pression (N) vers le côté haute pression (H).

2. Joint selon la revendication 1, **caractérisé en ce que** le dispositif de précontrainte (50a, 50b, 50d à 50 g) n'est pas conçu de manière à assurer l'étanchéité par rapport à la bague d'étanchéité et par rapport à l'espace de montage.

3. Joint selon la revendication 1 ou 2, **caractérisé en ce que** le dispositif de précontrainte (50a à 50e, 50g) est conçu en une pièce pour être appuyé sur un flanc de rainure (24) côté haute pression de la rainure formant l'espace de montage (20) et sur un fond de rainure (23) de la rainure et pour exercer simultanément une force de précontrainte en direction axiale et radiale sur la bague d'étanchéité (40a, 40b, 40e).

4. Joint selon la revendication 1 ou 2, **caractérisé en ce que** le dispositif de précontrainte (50f, 51 f) est conçu en une ou en plusieurs pièce(s) et comporte au moins deux éléments de précontrainte (50f, 51f), un premier élément de précontrainte (50f) étant conçu pour être appuyé sur un flanc de rainure (24) côté haute pression de la rainure formant l'espace de montage (20) et pour exercer une force de précontrainte en direction axiale sur la bague d'étanchéité (40f) et un deuxième élément de précontrainte (51f) étant conçu pour être appuyé sur un fond de rainure (23) de la rainure formant l'espace de montage (20) et pour exercer une pression de précontrainte en direction radiale sur la bague d'étanchéité (40f).

5. Joint selon l'une quelconque des revendications précédentes, **caractérisé en ce que** le dispositif de précontrainte est conçu en tant que ressort (50d) métallique, notamment en tant que ressort en spirale ou en tant que ressort en forme de V.

6. Joint selon l'une quelconque des revendications précédentes, **caractérisé en ce que** le dispositif de précontrainte (50a à 50g) est conçu de telle sorte que lors d'une pression différentielle prédéfinie entre la pression côté basse pression et la pression côté haute pression et lors d'une pression côté haute pression qui est inférieure à la pression côté basse pression, entre la bague d'étanchéité (40a, 40b, 40e, 40f) et le flanc de rainure (22) côté basse pression de la rainure formant l'espace de montage (20) soit formée une voie de décharge (26) pour l'échappement de la surpression côté basse pression vers le côté haute pression.

7. Joint selon l'une quelconque des revendications précédentes, **caractérisé en ce que** le dispositif de précontrainte (50d) est conçu en métal et comporte un revêtement (53) isolant électrique et/ou réduisant l'usure.

8. Joint selon la revendication 1, **caractérisé en ce que** le dispositif de précontrainte (50c) est conçu de telle sorte que dans des conditions de pression normales, il assure l'étanchéité par rapport à la bague d'étanchéité et par rapport à l'espace de montage et dans des conditions de pression inversées, il n'assure pas l'étanchéité par rapport à la bague d'étanchéité et/ou par rapport à l'espace de montage.

9. Joint selon la revendication 8, **caractérisé en ce que** le dispositif de précontrainte (50c) est conçu sous la forme d'un joint à lèvre.

10. Joint selon l'une quelconque des revendications précédentes, **caractérisé en ce qu'**entre la bague d'étanchéité (40b), la pièce de machine (2) immobile et la pièce de machine (3) mobile est placée une bague d'appui (60).

11. Joint selon l'une quelconque des revendications précédentes, **caractérisé en ce que** la bague d'étanchéité (40a) comporte côté basse pression une première et/ou côté haute pression une deuxième surface d'étanchéité (44, 45) prévue(s) pour s'appuyer sur la deuxième pièce de machine (3), la première surface d'étanchéité (44, 45) côté basse pression s'étendant sous un angle d'arête d'étanchéité (α) côté basse pression de 5° à 12°, notamment de 7° et la deuxième surface d'étanchéité (44) côté haute pression s'étendant sous un angle d'arête d'étanchéité (β) côté haute pression de 40° à 60°, notamment de 55° par rapport à la surface de la deuxième pièce de machine (3).

12. Dispositif d'étanchéité avec :
- une première pièce de machine (2), notamment immobile avec un espace de montage (20) formé par une rainure,
- une deuxième pièce de machine (3), notamment mobile et un joint (4a, 4b, 4e, 4f) selon l'une quelconque des revendications précédentes, inséré dans l'espace de montage (20) pour assurer l'étanchéité d'un côté haute pression (H) par rapport à un côté basse pression (N).
